# EUROPEAN PATENT SPECIFICATION

(11) **EP 2 422 098 B1**
(45) Date of publication and mention of the grant of the patent: **07.02.2018**
(21) Application number: 09843590.2
(22) Date of filing: 21.04.2009
(51) Int. Cl.: F16C 13/00, D21G 1/02, D21F 3/08, B05D 7/00

(54) **A ROLL FOR A FIBRE WEB MACHINE**
WALZE FÜR EINE FASERBAHNMASCHINE
ROULEAU POUR MACHINE À BANDE DE FIBRES

(43) Date of publication of application: 29.02.2012
(73) Proprietor: Valmet Technologies, Inc., 02150 Espoo (FI)
(72) Inventor: AJOVIITA, Tommi, FI-41160 Tikkakoski (FI)
(74) Representative: TBK
(86) International application number: PCT/FI2009/050294
(87) International publication number: WO 2010/122208

(56) References cited:
- EP-A1- 1 293 549
- WO-A1-2004/103582
- JP-A- 9 269 629
- JP-A- 9 269 629
- US-A1- 2001 016 547
- US-B1- 6 514 369

## Description

### FIELD OF THE INVENTION

The present invention relates to a roll for a fibre web machine, said roll comprising a roll body and a cover arranged on said roll body, said cover comprising a bottom layer comprising matrix material and fibres and a functional layer comprising matrix material and fibres.

### BACKGROUND

Fibre web machines, such as paper, board, finishing and tissue machines use several different types of rolls, such as press rolls, suction rolls and calender rolls. It is known that these rolls, having a cylindrical roll body which is typically made of metal, such as cast iron or hardened steel, can be covered by polymeric material.

Especially when speaking of calender rolls, the role of the cover is important for the process, as the paper web or the like is typically led to the calender unsupported, i.e. without the support of a fabric, to a nip formed between a calender roll, covered by a polymer, and a hard-faced counter roll. In such nip, the paper web is thus in direct contact with the roll surfaces.

As stated, calender rolls and other rolls have several effects on the paper web, i.e. on the gloss and smoothness of the finished paper, and also on the paper bulk. The size of the calender rolls is typically 3-12 m in length and 400-1500 mm in diameter. The magnitude of linear loads in these rolls can be as high as 300-600 N/mm.

In general, there is a difference in stiffness between the polymeric cover and the metallic roll body, which difference under loaded state causes shear stress on the metal-polymer interface. To minimise this stress, the polymer cover is manufactured of several layers of different stiffness properties. Typically the polymer cover is two-layered comprising a bottom layer on the metal body and a functional layer on the bottom layer, the stiffness of the bottom layer being lower than that of the metal body but higher than the stiffness of the functional layer.

Another problem with the polymeric roll covers is that the heat expansion coefficients of the polymeric cover and the metallic roll body are different and moreover, the polymeric cover tends to shrink during the manufacturing process, typically during the curing of the cover. This results in residual stresses in the cover that in turn deteriorate the performance of the cover. The residual stresses are a problem especially in covers cured in high temperatures and in general, they cause the usage time of the roll to shorten.

During the manufacturing of the cover, different heat expansion coefficients of the materials may cause residual stresses in the finished cover. These residual stresses may then lead to problems of delamination and general deterioration of the cover and its performance during use.

One way of limiting these problems has been to cast the surface layer as a separate tube which is then attached to the roll body covered with the bottom layer by incorporating an adhesive layer between the bottom layer and the surface layer. This method is however quite expensive and requires several process steps. It is also not possible to manufacture fibre reinforced covers by this method.

Document US 5,958,533 proposes to reduce the problems caused by chemical and thermal shrinkage by including intermediate compressive layers between the metallic roll body and the outer cover. The compressive layer may be manufactured from a three dimensional fabric filled with resin curable at a lower temperature than the cover. The compressive layer may also have the thickness required for the shrinkage so that no filling is needed, or the compressive layer may be made of meltable material that melts away when the cover is cured.

Document WO 2004/103582 presents another solution for diminishing the residual stresses, wherein the surface layer is cured before the base layer.

Document US20010016547 A1 mentions a roll for smoothing a web provided with a covering layer disposed on a roll body. The covering layer has an inner surface and an outer surface, and is made of elastic matrix material including a mixture of thermosetting plastic and thermoplastic. This document further discloses a method for manufacturing a cover for a role including forming an elastic cover layer comprising at least one thermosetting plastic and at least one thermoplastic.

This document forms the preamble of present claims 1 and 21.

Document EP1293549 A1 discloses a resin roll comprising a roll core, a fibre-reinforced underlayer, an outer layer made of a thermosetting resin and an adhesive injected between these two layers. This document further describes a method for manufacturing such a resin roll, said method including a fitting and fixing of the outer layer on the fibre-reinforced underlayer by using an adhesive.

### OBJECTS AND SUMMARY OF THE INVENTION

An object of the present invention is to minimise or even totally eliminate the problems existing in the prior art as well as to improve the methods disclosed in prior art.

An object of the present invention is to provide a method for manufacturing polymeric covers for rolls that is technically simple as well as easy and relatively cheap to carry out. Another object of the invention is to provide a roll wherein the residual stresses of the cover are minimised. A yet another object of the invention is to provide a roll that has improved durability under high loads.

The present invention thus relates to a roll for a paper, board, finishing or tissue machine, said roll comprising a roll body and a cover arranged on said roll body, said cover comprising a bottom layer comprising matrix material and fibres and a functional layer comprising matrix material and fibres. In a typical roll according to the present invention, the glass transition temperature of the matrix material of the bottom layer is at least 20 °C lower than the glass transition temperature of the matrix material of the functional layer.

### DETAILED DESCRIPTION OF THE INVENTION

It has now been found that when the glass transition temperature of the matrix material of the bottom layer is at least 20 °C lower than the glass transition temperature of the matrix material of the functional layer, the performance of the cover can be noticeably improved, as will be described below. The glass transition temperature, Tg, is measured by differential scanning calorimetry (DSC). General principles of Tg measurement by DSC are given in standards ISO 11357-1 and ASTM E1356-08, which can both be used interchangeably.

The advantage of a roll according to the present invention is that due to the difference of the glass transition temperatures of the matrix material of the two layers, the residual stresses caused by the hardening in elevated temperatures and the ensuing cooling of the cover start to form only at temperatures that are below the glass transition temperature of the matrix material of the bottom layer. It is also believed that as the heat expansion of the matrix material of the bottom layer is larger above its glass transition temperature, the bottom layer when expanding during heating also expands the functional layer. Respectively, when the bottom layer shrinks more that the functional layer during cooling, the heat shrinkage of the functional layer is thereby compensated and thus residual stresses caused by the heat shrinkage are reduced. These two combined leads to residual stresses that are significantly smaller than in covers manufactured according to the prior art.

Smaller amount of residual stresses leads to improved performance of the roll cover and the roll, specifically with respect to the resistances to load, impact resistance, crack resistance and wear. Moreover, as there are lesser stresses between the metallic roll body and the cover, the cover adheres better to the roll body.

Yet further, it is believed that the use of a polymer having a lower Tg in the bottom layer enables a better hardening of the cover. Indeed, the hardening of the cover can be achieved to a higher degree. Typically, the interface of the bottom layer and the roll body is the point where the hardening (curing) temperature is the most difficult to achieve during the manufacture of the roll cover. When a polymer having a lower Tg is used in the bottom layer, also the required hardening temperature is lower, and thus easier to achieve. Therefore the bottom layer reaches a higher degree of hardening and the properties of the finished cover can be optimised.

The glass transition temperature of the matrix material of the bottom layer is thus at least 20 °C lower than the glass transition temperature of the matrix material of the functional layer. The difference of glass transition temperature may be for example 25, 30, 35, 40, 45, 50, 55, 60, 65, 70, 75, 80, 85, 90, 95, 100 °C or even more. The difference may also be selected as a range from 20, 30, 40, 50, 60, 70 or 80 °C up to 25, 30, 35, 45, 50, 60, 70, 80, 90 or 100 °C. The larger the difference in the glass transition temperature, the better it is believed to be for the purpose of this invention compared to a cover with high Tg matrix only. Typically, the glass transition temperature of the functional layer in the specific application of calenders, for example, is at least 100 °C and at most 200 °C. Indeed, the performance of the roll covered with polymeric layers is mainly determined by the surface layer, i.e. the functional layer. The glass transition temperature of the bottom layer in this kind of applications is at least 80 °C.

In order to arrive at this difference of glass transition temperature between the matrix material of the bottom layer and the functional layer, there are several possibilities. Indeed, it is for example possible to use different resins in the layers but the same hardener. Another possibility is to use the same resin in both layers but different hardeners. Yet another possibility is to use chemically totally different resins in the different layers.

Some examples of ways of obtaining the difference of at least 20 °C in the glass transition temperatures are listed below.
a) The basic resin for the bottom layer and the functional layer is the same, but the resin of the functional layer has an additional resinous ingredient. For example, the resin of the bottom layer is selected from the group of epoxy resins such as Bisphenol-A or Bisphenol-F. The resin of the functional layer is the same as the resin of the bottom layer with the provision that multifunctional epoxy resin has been added, such as triglycidylether of para-aminophenol (TGPAP), N,N,N',N'-tetraglycidyl-4,4'-diaminodiphenylmethane (TGDDM) or epoxy novolac resin. The aim of this multifunctional epoxy resin is to increase the glass transition temperature of the functional layer, thus bringing the desired surface properties such as resistance to higher temperatures to the finished cover. For example, the bottom layer comprises as resin bisphenol-F, bisphenol-A or a mixture thereof and the hardener is 4,4'-methylenedianiline (MDA) or diethyltoluenediamine (DETDA). In the functional layer, at least 20 % of the resin is replaced with a multifunctional resin such as triglycidylether of para-aminophenol (TGPAP) or N,N,N',N'-tetraglycidyl-4,4'-diaminodiphenylmethane (TGDDM).
b) The basic resin of both the bottom layer and the functional layer is the same, but the resin of the bottom layer has been modified with a resin that decreases the glass transition temperature. As an example, the resins of item a) above could be used for both the bottom layer and the functional layer, the modifying resin of the bottom layer being for example an aliphatic epoxy. Thus also other advantages are obtained, such as improved processability of the bottom layer due to the lower viscosity of the resin. For example, both the bottom layer and the functional layer comprise as hardener 4,4'-methylenedianiline (MDA) or diethyltoluenediamine (DETDA) and as main resin bisphenol-F, bisphenol-A or a mixture thereof further comprising at least 20 % of triglycidylether of para-aminophenol (TGPAP) or N,N,N',N'-tetraglycidyl-4,4'-diaminodiphenylmethane (TGDDM). The resin component of the bottom layer further comprises 10 - 30 % of aliphatic epoxy resin.
c) The resin of the bottom and functional layers is the same and the same hardener is used for both layers, but the hardener of the bottom layer is modified by a component leading to a lower glass transition temperature of the matrix resin. The resin for the bottom layer and the functional layer may be for example the same used in item a) above and the hardener used can be for example aromatic multifunctional amine such as aromatic diamine, cycloaliphatic multifunctional amine such as cycloaliphatic diamine, or a mixture of different multifunctional amines, whereas the hardener of the bottom layer additionally comprises for example polyether amine, aliphatic amine, aliphatic multifunctional amine or a mixture of different amines. For example, both the bottom layer and the functional layer comprise as hardener 4,4'-methylenedianiline (MDA) or diethyltoluenediamine (DETDA) and as resin bisphenol-F, bisphenol-A or a mixture thereof further comprising triglycidylether of para-aminophenol (TGPAP) or N,N,N',N'-tetraglycidyl-4,4'-diaminodiphenylmethane (TGDDM). The hardener of the bottom layer further comprises 20 - 50 % of triethylenetetramine (TETA), 2-methyl-1,5-pentanediamine or polyoxypropylene triamine.
d) The resin of the bottom and functional layers is the same but different hardeners are used in the different layers. Different hardener means here that the hardener of the bottom layer does not comprise the hardener of the functional layer. The hardener of the bottom layer is chemically essentially different from the hardener of the functional layer, the hardener of the bottom layer leading to a lower glass transition temperature. Examples of the hardeners are aromatic amines, cycloaliphatic amines and their mixtures; polyetheramine, aliphatic multifunctional amines, epoxy anhydrides, polyamides, imidazoles and dicyanoamides. The hardener of the functional layer may be for example aromatic or cycloaliphatic amine or a mixture of different amines whereas the hardener of the bottom layer may be for example a cycloaliphatic amine, polyether amine or aliphatic amine, leading to a lower glass transition temperature of the matrix polymer. For example, both the bottom layer and the functional layer comprise as resin bisphenol-F, bisphenol-A or a mixture thereof further comprising at least 20 % of triglycidylether of para-aminophenol (TGPAP) or N,N,N',N'-tetraglycidyl-4,4'-diaminodiphenylmethane (TGDDM). The functional layer comprises as hardener an aromatic amine such as 4,4'-methylenedianiline (MDA) or diethyltoluenediamine (DETDA) and the bottom layer comprises as hardener either a cycloaliphatic amine such as 1,2-daminocyclohexane (DACH) or isophorondiamine (IPDA), 4,4'-methylenebis(cyclohexylamine) (PACM) or an aliphatic amine such as triethylenetetramine (TETA), 2-methyl-1,5-pentanediamine or polyoxypropylene triamine, or yet further a mixture of a cycloaliphatic amine and an aliphatic amine.
e) The resin and the hardener of the bottom layer are chemically different from the resin and the hardener of the functional layer, such that the functional layer has the properties required and the bottom layer has a lower glass transition temperature. Examples of suitable resins for the layers could be thermoset and thermoplastic polymers, such as polyolefins, polyester, polyamide, polyetheretherketone (PEEK), polyamideimide (PAI) and epoxy. For example, the bottom layer is manufactured from an epoxy hardener with an amine, and having a Tg of 100 - 150 °C and the functional layer comprises a thermoset resin such as bismaleimide or syanate ester having a Tg of over 200 °C.

At the time of making this invention, it is believed that the most appropriate solution is as listed under point a) above, i.e. the resins of the different layers have essentially the same basic structure, but the resin of the functional layer has been supplemented with a multifunctional resin.

Some concrete examples are given in the Table below, where the letters a-e refer to those of the list above.

| | | BOTTOM LAYER | FUNCTIONAL LAYER | Tg-difference |
|---|---|---|---|---|
| a | resin | 100 % bisf-A or bisf-F or mix | <80 % resin of the bottom layer | ≥20 |
| | | | >20 % TGPAP or TGDDM | |
| | hardener | MDA or DETDA | as the bottom layer | |
| b | resin | 70-90 % resin of the functional layer | <80 % bisf-A or bisf-F or mix | >20 |
| | | 10-30 % aliphatic epoxy | >20 % TGPAP or TGDDM | |
| | hardener | MDA or DETDA | as the bottom layer | |
| c | resin | <80 % bisf-A or bisf-F or mix | as the bottom layer | >20 |
| | | >20 % TGPAP or TGDDM | | |
| | hardener | 50-80 % hardener of the functional layer 20-50 % TETA or MPDA or POPTA | 100 % MDA or DETDA | |
| d | resin | <80 % bisf-A or bisf-F or mix | as the bottom layer | >20 |
| | | >20 % TGPAP or TGDDM | | |
| | hardener | DACH or IPDA or PACM or TETA or MPDA or POPTA or mix of aliphatic or cycloaliphatic amine | MDA or DETDA | |
| e | resin | Epoxy with Tg 100-150 °C | thermoset resin such as bismaleimide or cyanate ester with Tg over 200 °C | >20 |
| | hardener | amine hardener | appropriate | |

### ABBREVIATIONS :

bisf-A = bisphenol-A epoxy resin
bisf-F = bisphenol-F epoxy resin
MDA = 4,4'-methylenedianiline
DETDA = diethyltoluenediamine
TGPAP = triglycidylether of para-aminophenol
TGDDM = N,N,N',N'-tetraglycidyl-4,4'-diaminodiphenylmethane
TETA = triethylenetetramine
MPDA = 2-methyl-1,5-pentanediamine
POPTA = polyoxypropylene triamine
DACH = 1,2-diaminocyclohexane
IPDA = isophorondiamine
PACM = 4,4'-methylenebis(cyclohexylamine)
mix = mixture

It is also clear to a person skilled in the art that it is possible to use the same components in both the bottom layer and the functional layer, but in different proportions, in order to arrive at the required difference of glass transition temperature.

A person skilled in the art is readily able to provide other types of resins, which indeed do not need to be epoxy-based and can be thermoplastic resins as well. The resins and hardeners listed above are thus only examples.

An advantage of the present invention is thus that it is possible to optimise the properties of the bottom layer by appropriately choosing the matrix material of this layer, and this without effect to the properties of the functional layer.

It is also possible to incorporate further layers in the cover, and in this case, it is preferable that there exists a difference in glass transition temperature between each layer, the glass transition temperature of the matrix material increasing from the bottom layer radially towards the functional layer.

According to an embodiment of the invention, a second resin is a mixture of a first resin and a third resin, which third resin increases the glass transition temperature of the second resin. According to another embodiment of the invention, the first resin comprises the second resin modified by a fourth resin, which fourth resin decreases the glass transition temperature of the first resin.

It is also possible that the first resin and the second resin are identical and that the first hardener comprises a second hardener and a fifth component decreasing the glass transition temperature of the first resin. The first resin and the second resin can also be identical and the first hardener can be different from the second hardener.

According to yet another embodiment of the invention, the first resin and the second resin are selected from the group consisting of epoxy resins, such as 4,4'-dihydroxy-2,2-diphenylpropane (bisphenol-A epoxy resin), bis(3-chloro-2-hydroxypropyl) ether (bisphenol-F epoxy resin) and mixtures thereof. The third resin can be a multifunctional epoxy resin, such as triglycidylether of para-aminophenol (TGPAP), N,N,N',N'-tetraglycidyl-4,4'-diaminodiphenylmethane (TGDDM) and epoxy novolac resin. The fourth resin may be an aliphatic epoxy resin.

Preferably, the first hardener and the second hardener are selected from the group consisting aromatic multifunctional amines, cycloaliphatic multifunctional amines and mixtures thereof. The fifth component can be selected from the group consisting of polyether amine, aliphatic amine, aliphatic multifunctional amine and mixtures thereof. Moreover, the first and second hardeners can be different and selected from the group consisting aromatic amines, cycloaliphatic amines and mixtures thereof, polyether amine, aliphatic multifunctional amines, epoxy anhydrides, polyamides, imidazoles, dicyanoamides and mixtures thereof.

According to yet another embodiment of the invention, the first and second resins are different and selected from the group consisting of thermoset and thermoplastic polymers, such as polyolefins, polyester, polyamide, polyetheretherketone (PEEK), polyamideimide (PAI) and epoxy. Inorganic fibres applicable in the invention are for example glass or boron fibres. Organic fibres applicable in the invention are for example polyacrylonitriles, polyamides, aromatic polyamides and carbon fibre. Type of the fibres can be in the form of woven or non-woven felt or roving fibre. Non-woven felts may have been manufactured by hydroentanglement, mechanical needling or binder bonding.

The fibres used in the bottom layer may be for example glass fibres, carbon fibres, para-aramide fibres or a mixture of para-aramide and glass fibres. Mixtures of fibres can be used for example in the form of a woven fabric wherein two or more types of fibres are used. Typical fibres for the functional layer are for example para-aramide fibres or polyester fibres. The diameter of the fibres used may vary from 0.1 to 50 µm, preferably from 1 to 20 µm, a typical example being a diameter of 10 µm.

The cover of the present invention may contain fillers. With the fillers, properties of the cover can be improved or its cost can be cut. Typically, fillers are used to improve wear resistance and to adjust matrix stiffness and hardness. Fillers applicable in the invention are inorganic fillers, such as metal, ceramic and mineral fillers, for example aluminium oxide, silicon oxide, carbides, nitrides, glass, silicates, wollastonite and mica in many different particle forms like powder, balls, pearls, fibres etc., and synthetic organic fillers, such as synthetic polymers for example UHMWPE, synthetic fibres such as short fibres, chopped fibres, powdered fibres, aliphatic or aromatic polyamide as an example.

The amount of fillers in the cover may vary. For example, the amount of fillers in the finished cover may increase radially from bottom to top. Preferably the bottom layer does not contain any fillers. This leads to improved fibre impregnation of the bottom layer by the resin forming the matrix material and thus a more uniform and resistant bottom layer. This in turn further enhances the adhesion between the bottom layer and the roll body. Further, a filler-free bottom layer is preferred also because of better processability of the resin as well as its higher thermal expansion coefficient. Thus, the filler-free bottom layer or a filler-free bottom zone near the roll body has many benefits which cannot be achieved with the prior art covers using the same resin and hardener through the whole cover thickness.

The cover of the invention may also contain other additives and process aid agents such as polymerization initiators, activators and accelerators, hardeners, plasticizers, thermal stabilisers, antioxidants, antiozonates, pigments, air release agents, filler wetting and dispersing agents, levelling agents, defoaming agents, dispersion stabilisers, reactive diluents etc. for promoting the process and improving physical properties of the cover. These agents are mixed with the matrix before bringing into contact with the fibre material.

It is for example possible to use in the bottom layer additives that enhance the adhesion between the roll body and the cover. Moreover, according to the present invention it is possible to use in the bottom layer additives that cannot be used in the functional layer, and *vice versa.*

According to an embodiment of the invention, it is also possible to manufacture a cover having more than two layers, such as for example three, four, five or six layers. As an example, it can be mentioned a cover comprising three layers, a bottom layer comprising fibres and a matrix material according to the prior art, an intermediate layer comprising fibres and a matrix material having a glass transition temperature that is lower, for example at least 20 °C lower, than the glass transition temperature of the matrix material of the functional layer, that is arranged on top of this intermediate layer and comprises matrix material and fibres. This kind of arrangement also decreases the formation of residual stresses in the functional layer and prevents their transfer to the bottom layer. This also leads to an increased temperature resistance of the bottom layer, which may be useful in some applications.

The invention also relates to a method for manufacturing a cover for a roll of a paper, board, finishing or tissue machine, comprising the steps of providing a bottom layer comprising matrix material and fibres on a roll body, and providing a functional layer comprising matrix material and fibres on said bottom layer. In a typical method of the invention the glass transition temperature of the matrix material of the bottom layer is at least 20 °C lower than the glass transition temperature of the matrix material of the functional layer.

The method according to the present invention thus allows manufacturing polymeric roll covers having improved properties in an efficient, easy and relatively inexpensive way.

One example of manufacturing a roll cover according to the present invention is as follows. A first layer of woven glass fibre fabric impregnated with a first resin having a lower glass transition temperature is applied, for example by winding on the metallic roll body. A second layer of nonwoven glass fibre felt impregnated with said first resin is applied, e.g. wound, on the first layer. These two layers form the bottom layer of the cover. The nonwoven felt of the second layer may be for example identical to that of the functional layer or it can have properties suitable for an intermediate layer. The aim of a layer with nonwoven felt is to provide a layer that has more resin than the first layer, so that it is more readily deformable and relaxable than the first layer made of woven felt. A nonwoven layer also has the advantage of providing a more uniform interface between the bottom-most layer and the functional layer.

The first two layers mentioned above can be, if so desired, pre-hardened and evened out by turning and/or grinding in order to prevent problems that may be caused by the mixing of the resins of the second layer and the following functional layer and to have an even interface for forming the functional layer. Indeed, as a third step, a functional layer is formed on the second layer by reeling nonwoven felt impregnated with a resin having a higher glass transition temperature. Thereafter, the cover is pre-cured with infrared radiation and the curing is finished in an oven.

The curing temperature in the oven is significantly higher than the glass transition temperature of the matrix material of the bottom layer. When the cover is cooled down after curing, the functional layer starts to shrink when the temperature decreases below its glass transition temperature. The bottom layer is at this point still in the rubbery state above its glass transition temperature and can thus relax and to some extent also deform, whereby no stresses are caused between the cover and the metallic roll body due to the shrinkage of the functional layer. These residual stresses start to form only once the bottom layer's temperature decreases below its glass transition temperature and thus the amount of residual stresses is significantly reduced.

The present invention also relates to a calender for a paper, board or finishing machine comprising a roll according to the present invention. The calender may be a so-called soft-calender or a multinip calender. The soft-calender comprises a nip between a hard-face roll and a polymer covered roll according to the invention. Typical multinip calenders comprise a number of rolls, arranged on top of each other. All or some of the calender rolls may comprise a cover according to the present invention. Especially the top and/or the bottom roll of a multinip calender may have a cover according to the present invention. The invention also relates to a machine for manufacturing or treating a cellulosic web comprising at least one roll according to the present invention. Possible fibre web machines for manufacturing or treating a cellulosic web are, for example, paper machines, board machines, tissue machines, on-line calenders, off-line calenders, etc.

All the embodiments and characteristics disclosed in this specification apply to all the different aspects of the invention, i.e. the embodiments listed for the roll apply *mutatis mutandis* to the method, calender and machine.

In this context, the term "comprising" is to be construed as an open term, i.e. other features may be included in addition to those listed.

### EXPERIMENTAL PART

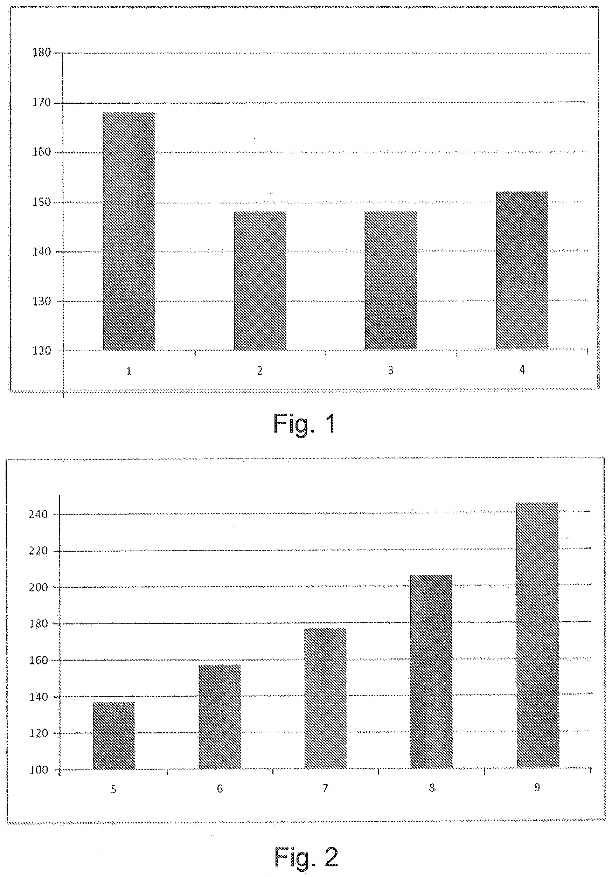

Different combinations of materials for the bottom layer and the functional layer were tested. The glass transition temperature Tg was measured by differential scanning calorimetry (DSC). The results are shown in Figures 1 and 2, where temperature is given in °C on the ordinate.

### Examples 1-4

Different combinations of hardening materials were tested. Diethyltoluenediamine (DETDA) hardener was modified with other type of hardeners suitable for use in curing epoxy resins. Glass transition temperature (Tg) of the mixtures was determined by differential scanning calorimetry (DSC). The following combinations were tested (abbreviations as in Table 1):
Example 1: 100% DETDA
Example 2: 80 % DETDA / 20 %TETA (triethylenetetramine)
Example 3: 80 % DETDA / 20 % MPDA (2-methyl-1,5-pentanediamine)
Example 4: 80 % DETDA / 20 % POPTA (polyoxypropylene triamine)

The results are given in Figure 1 where the temperature is given in °C on the ordinate. It can be seen in Figure 1 that Tg-value of the higher Tg hardener DETDA decreased about 25-30 °C when DETDA was modified by a suitable amine. When the hardeners of examples 2-4 are used in the bottom layer and a hardener of Example 1 in the functional layer of the roll cover, it leads to a lower glass transition temperature in the bottom layer, provided that the matrix resins of the layers are otherwise unchanged.

### Examples 5-9

Different combinations of resin materials were tested. An epoxy resin of bisfenol-F type was modified with a multifunctional epoxy resin N,N,N',N'-tetraglycidyl-4,4'-diaminodiphenylmethane (TGDDM) in different ratios. Glass transition temperature (Tg) of the mixtures was determined by differential scanning calorimetry (DSC). The following combinations were tested.

| | Bisfenol-F / TGDDM - ratio | Tq-difiference (°C) when compared to Example 5 |
|---|---|---|
| Example 5 | 100/0 | n.a. |
| Example 6 | 75/25 | 22 |
| Example 7 | 50/50 | 30 |
| Example 8 | 25/75 | 65 |
| Example 9 | 0/100 | >100 |

| | | |
|---|---|---|
| n.a. = not applicable | | |

The results are given in Figure 2 where temperature is given in °C on the ordinate. It can be seen in Figure 2 that the Tg-value of the bisfenol-F epoxy resin raised drastically. When 1/4 of the bisfenol-F resin was replaced with TGDDM the Tg value of the resin increased by more than 20 °C. When the resins of Examples 6-8 were used in the functional layer and the resin of Example 5 in the bottom layer of a roll cover of the invention the Tg difference between the layers is more than 20 °C and gives the benefits of the invention. Further, the resin of Example 6 in the bottom layer and the resin of Example 8 in the functional layer can be used. The invention is not limited to the ratios given above, but is fulfilled when a Tg difference of 20 °C between the bottom and the functional layers is present.Furthermore, a roll with a cover according to the invention was manufactured and tested.

### Example 10

On a steel roll body of a nip simulator device, length 20 cm, diameter 20 cm, was manufactured a cover of the invention in which:
a) the bottom layer was manufactured on the steel body of the roll by winding a woven glass fibre cloth impregnated with bisphenol-F-epoxy resin; on its surface a layer of non-woven Kevlar fibre was wound to give a better interface between the bottom and functional layers;
b) the functional layer was manufactured on the bottom layer by winding a sparse glass fibre cloth impregnated with epoxy resin comprising bisphenol-F-epoxy and TGDDM (75/25), and
c) the cover thus made was cured at a temperature of about 160 °C.

### Comparative example

The cover of the comparative example was manufactured as in Example 1 except that the bottom layer also comprised TGDDM as hardener.

In testing of the covers a nip simulator was used which comprised two rolls having length of 20 cm and diameter of 20 cm in nip contact with each other, the maximum linear load being 400-600 kN/m. One of the rolls was hard faced metal roll and the other roll was the roll manufactured in Example 10 or in the Comparative Example. Both rolls were thermally adjustable.

The rolls were rotated by an electric motor with rotational speeds of 800, 1200 and 1400 rpm (rotation per minute). Durability of the covers was determined for different linear loads until visual indications of damage was seen or, most often, a local overheating (a so called hot spot) was measured which is known to cause a cover damage in a very short term or in case of increased load. Temperature of the cover was monitored during the test to discover the hot spots.

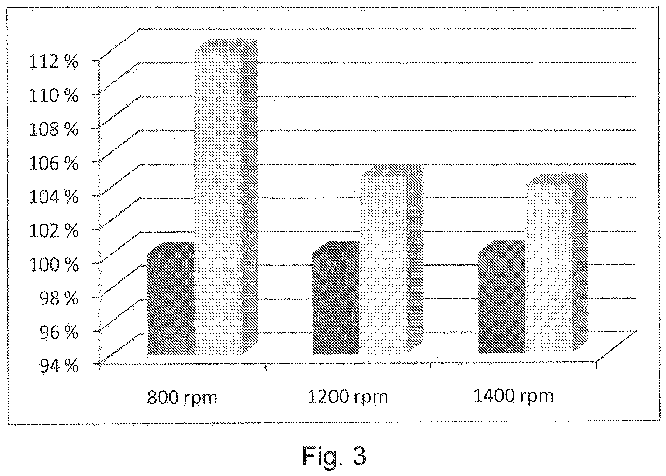

The results are given in Figure 3. Linear load durability with different speed levels are given relatively so that durability of the comparative cover (the left column on each pair) was 100 % and the durability performance of the cover according to the invention was compared to that. As can be seen from the results, performance of the cover of the invention or its ability to resist high loads is clearly better than that of the comparative cover with each rotational speed level that was used.

## Claims

1. A roll for a paper, board, finishing or tissue machine, said roll comprising a roll body and a cover arranged on said roll body, said cover comprising
- a bottom layer and
- a functional layer comprising matrix material and fibres,
**characterised in that** the bottom layer comprises matrix material and fibres and the glass transition temperature of the matrix material of the bottom layer is at least 20 °C lower than the glass transition temperature of the matrix material of the functional layer.

2. A roll according to claim 1, **characterised in that** the glass transition temperature of the matrix material of the bottom layer is at least 40 °C lower than the glass transition temperature of the matrix material of the functional layer.

3. A roll according to claim 1 or 2, **characterised in that** the matrix material of the bottom layer comprises a first resin and a first hardener and that the matrix material of the functional layer comprises a second resin and a second hardener.

4. A roll according to claim 3, **characterised in that** the second resin is a mixture of the first resin and a third resin, which third resin increases the glass transition temperature of the second resin.

5. A roll according to claim 3, **characterised in that** the first resin comprises the second resin modified by a fourth resin, which fourth resin decreases the glass transition temperature of the first resin.

6. A roll according to claim 3, **characterised in that** the first resin and the second resin are identical and **in that** the first hardener comprises the second hardener and a fifth component decreasing the glass transition temperature of the first resin.

7. A roll according to claim 3, **characterised in that** the first resin and the second resin are identical and **in that** the first hardener is different from the second hardener.

8. A roll according to any of the claims 3-7, **characterised in that** the first resin and the second resin are selected from the group consisting of epoxy resins.

9. A roll according to claim 8, **characterised in that** the epoxy resin is selected from the group consisting of 4,4'-dihydroxy-2,2-diphenylpropane (bisphenol-A epoxy resin), bis(3-chloro-2-hydroxypropyl) ether (bisphenol-F epoxy resin) and mixtures thereof.

10. A roll according to claims 4 and 8, **characterised in that** the third resin is a multifunctional epoxy resin.

11. A roll according to claim 10, **characterised in that** the multifunctional epoxy resin is selected from the group consisting of triglycidylether of para-aminophenol (TGPAP), N,N,N',N'-tetraglycidyl-4,4'-diaminodiphenylmethane (TGDDM) and epoxy novolac resin.

12. A roll according to claims 5 and 8, **characterised in that** the fourth resin is an aliphatic epoxy resin.

13. A roll according to any of the claims 3-12, **characterised in that** the first hardener and the second hardener are selected from the group consisting of aromatic multifunctional amines, cycloaliphatic multifunctional amines and mixtures thereof.

14. A roll according to any of the claims 6-13, **characterised in that** the fifth component is selected from the group consisting of polyether amine, aliphatic amine, aliphatic multifunctional amine and mixtures thereof.

15. A roll according to any of the claims 3-12, **characterised in that** the first and second hardeners are different and selected from the group consisting of aromatic amines, cycloaliphatic amines and mixtures thereof, polyether amine, aliphatic multifunctional amines, epoxy anhydrides, polyamides, imidazoles, dicyanoamides and mixtures thereof.

16. A roll according to any of the claims 3-5, **characterised in that** the first and second resins are different and selected from the group consisting of thermoset and thermoplastic polymers, such as polyolefins, polyester, polyamide, polyetheretherketone (PEEK), polyamideimide (PAI) and epoxy.

17. A roll according to any of the preceding claims, **characterised in that** the fibres are selected from the group consisting of glass fibres, carbon fibres, aramide fibres, carbide fibres, polymer fibres and mixtures thereof.

18. A roll according to any of the preceding claims, **characterised in that** the fibres of the bottom layer are different from the fibres of the functional layer

19. A roll according to any of the preceding claims, **characterised in that** the matrix material further comprises fillers and additives.

20. A roll according to any of the preceding claims, **characterised in that** the bottom layer is free of fillers.

21. A method for manufacturing a cover of a roll for a paper, board, finishing or tissue machine, comprising the steps of
- providing a bottom layer comprising matrix material and fibres on a roll body,
- providing a functional layer comprising matrix material and fibres on said bottom layer,
**characterised in that** the glass transition temperature of the matrix material of the bottom layer is at least 20 °C lower than the glass transition temperature of the matrix material of the functional layer.

22. A manufacturing or treatment apparatus for a cellulosic fibre web comprising a roll according to any of the claims 1-20.

23. A manufacturing or treatment apparatus for a cellulosic fibre web according to claim 22, **characterised in that** the apparatus is a calender.

## Patentansprüche

1. Walze für eine Papier-, Karton-, Endbearbeitungs- oder Tissue-Maschine, die Walze umfassend einen Walzenkörper und einen an dem Walzenkörper angeordneten Überzug, der Überzug umfassend:
- eine untere Schicht und
- eine Funktionsschicht umfassend Matrixmaterial und Fasern,
**dadurch gekennzeichnet, dass** die untere Schicht Matrixmaterial und Fasern umfasst und die Glasübergangstemperatur des Matrixmaterials der unteren Schicht zumindest 20°C niedriger als die Glasübergangstemperatur des Matrixmaterials der Funktionsschicht ist.

2. Walze nach Anspruch 1, **dadurch gekennzeichnet, dass** die Glasübergangstemperatur des Matrixmaterials der unteren Schicht zumindest 40°C niedriger als die Glasübergangstemperatur des Matrixmaterials der Funktionsschicht ist.

3. Walze nach Anspruch 1 oder 2, **dadurch gekennzeichnet, dass** das Matrixmaterial der unteren Schicht ein erstes Harz und ein erstes Härtemittel umfasst und dass das Matrixmaterial der Funktionsschicht ein zweites Harz und ein zweites Härtemittel umfasst.

4. Walze nach Anspruch 3, **dadurch gekennzeichnet, dass** das zweite Harz eine Mischung des ersten Harzes und eines dritten Harzes ist, wobei das dritte Harz die Glasübergangstemperatur des zweiten Harzes erhöht.

5. Walze nach Anspruch 3, **dadurch gekennzeichnet, dass** das erste Harz das durch ein viertes Harz modifizierte zweite Harz umfasst, wobei das vierte Harz die Glasübergangstemperatur des ersten Harzes verringert.

6. Walze nach Anspruch 3, **dadurch gekennzeichnet, dass** das erste Harz und das zweite Harz identisch sind und dadurch, dass das erste Härtemittel das zweite Härtemittel und eine die Glasübergangstemperatur des ersten Harzes erniedrigende fünfte Komponente umfasst.

7. Walze nach Anspruch 3, **dadurch gekennzeichnet, dass** das erste Harz und das zweite Harz identisch sind und dadurch, dass das erste Härtemittel unterschiedlich ist von dem zweiten Härtemittel.

8. Walze nach einem der Ansprüche 3 bis 7, **dadurch gekennzeichnet, dass** das erste Harz und das zweite Harz ausgewählt sind aus der Gruppe bestehend aus Epoxidharzen.

9. Walze nach Anspruch 8, **dadurch gekennzeichnet, dass** das Epoxidharz ausgewählt ist aus der Gruppe bestehend aus 4,4'-Dihydroxy-2,2-Diphenylpropan (Bisphenol-A Epoxidharz), Bis (3-Chloro-2-Hydroxypropyl) Ether (Bisphenol-F-Epoxidharz) und Mischungen davon.

10. Walze nach Anspruch 4 und 8, **dadurch gekennzeichnet, dass** das dritte Harz ein multifunktionales Epoxidharz ist.

11. Walze nach Anspruch 10, **dadurch gekennzeichnet, dass** das multifunktionale Epoxidharz ausgewählt ist aus der Gruppe bestehend aus Triglycidylether von Para-Aminophenol (TGPAP), N,N,N',N'-Tetraglycidyl-4-4'-Diaminodiphenylmethan (TGDDM) und Epoxid-Novolac-Harz.

12. Walze nach Anspruch 5 und 8, **dadurch gekennzeichnet, dass** das vierte Harz ein aliphatisches Epoxidharz ist.

13. Walze nach einem der Ansprüche 3 bis 12, **dadurch gekennzeichnet, dass** das erste Härtemittel und das zweite Härtemittel ausgewählt sind aus der Gruppe bestehend aus aromatischen multifunktionalen Aminen, cykloaliphatischen multifunktionalen Aminen und Mischungen davon.

14. Walze nach einem der Ansprüche 6 bis 13, **dadurch gekennzeichnet, dass** die fünfte Komponente ausgewählt ist aus der Gruppe bestehend aus Polyetheramin, aliphatischem Amin, aliphatischem multifunktionalem Amin und Mischungen davon.

15. Walze nach einem der Ansprüche 3 bis 12, **dadurch gekennzeichnet, dass** die ersten und zweiten Härtemittel unterschiedlich sind und ausgewählt sind aus der Gruppe bestehend aus aromatischen Aminen, cykloaliphatischen Aminen und Mischungen davon, Polyetheramin, aliphatischen multifunktionalen Aminen, Epoxyanhydriden, Polyamiden, Imidazolen, Dicyanoamiden und Mischungen davon.

16. Walze nach einem der Ansprüche 3 bis 5, **dadurch gekennzeichnet, dass** die ersten und zweiten Harze unterschiedlich sind und ausgewählt sind aus der Gruppe bestehend aus duroplastischen und thermoplastischen Polymeren, wie z.B. Polyolefinen, Polyester, Polyamid, Polyetheretherketon (PEEK), Polyamidimid (PAI) und Epoxid.

17. Walze nach einem der vorstehenden Ansprüche, **dadurch gekennzeichnet, dass** die Fasern ausgewählt sind aus der Gruppe bestehend aus Glasfasern, Kohlenstofffasern, Aramidfasern, Carbidfasern, Polymerfasern und Mischungen davon.

18. Walze nach einem der vorstehenden Ansprüche, **dadurch gekennzeichnet, dass** die Fasern der unteren Schicht unterschiedlich sind von den Fasern der Funktionsschicht.

19. Walze nach einem der vorstehenden Ansprüche, **dadurch gekennzeichnet, dass** das Matrixmaterial ferner Füllstoffe und Additive umfasst.

20. Walze nach einem der vorstehenden Ansprüche, **dadurch gekennzeichnet, dass** die untere Schicht frei von Füllstoffen ist.

21. Verfahren zum Herstellen eines Überzugs einer Walze für eine Papier-, Karton-, Endbearbeitungs- oder Tissue-Maschine, umfassend die Schritte von
- Bereitstellen einer unteren Schicht umfassend Matrixmaterial und Fasern auf einen Walzenkörper
- Bereitstellen einer Funktionsschicht umfassend Matrixmaterial und Fasern auf der unteren Schicht,
**dadurch gekennzeichnet, dass** die Glasübergangstemperatur des Matrixmaterials der unteren Schicht zumindest 20°C niedriger als die Glasübergangstemperatur des Matrixmaterials der Funktionsschicht ist.

22. Verfahren- oder Behandlungsvorrichtung für eine Zellulosefaserbahn umfassend eine Walze nach einem der Ansprüche 1 bis 20.

23. Verfahren- oder Behandlungsvorrichtung für eine Zellulosefaserbahn nach Anspruch 22, **dadurch gekennzeichnet, dass** die Vorrichtung ein Kalander ist.

## Revendications

1. Rouleau pour une machine à papier, à carton, à apprêter, ou à ouate, ledit rouleau comprenant un corps de rouleau et un revêtement agencé sur ledit corps de rouleau, ledit revêtement comprenant
- une couche de fond et
- une couche fonctionnelle comprenant un matériau de matrice et des fibres,
**caractérisé en ce que** la couche de fond comprend un matériau de matrice et des fibres et la température de transition vitreuse du matériau de matrice de la couche de fond est inférieure d'au moins 20 °C à la température de transition vitreuse du matériau de matrice de la couche fonctionnelle.

2. Rouleau selon la revendication 1, **caractérisé en ce que** la température de transition vitreuse du matériau de matrice de la couche de fond est inférieure d'au moins 40 °C à la température de transition vitreuse du matériau de matrice de la couche fonctionnelle.

3. Rouleau selon la revendication 1 ou 2, **caractérisé en ce que** le matériau de matrice de la couche de fond comprend une première résine et un premier durcisseur, et **en ce que** le matériau de matrice de la couche fonctionnelle comprend une deuxième résine et un deuxième durcisseur.

4. Rouleau selon la revendication 3, **caractérisé en ce que** la deuxième résine est un mélange de la première résine et d'une troisième résine, laquelle troisième résine augmente la température de transition vitreuse de la deuxième résine.

5. Rouleau selon la revendication 3, **caractérisé en ce que** la première résine comprend la deuxième résine modifiée par une quatrième résine, laquelle quatrième résine abaisse la température de transition vitreuse de la première résine.

6. Rouleau selon la revendication 3, **caractérisé en ce que** la première résine et la deuxième résine sont identiques et **en ce que** le premier durcisseur comprend le deuxième durcisseur et un cinquième composant abaissant la température de transition vitreuse de la première résine.

7. Rouleau selon la revendication 3, **caractérisé en ce que** la première résine et la deuxième résine sont identiques et **en ce que** le premier durcisseur est différent du deuxième durcisseur.

8. Rouleau selon l'une quelconque des revendications 3 à 7, **caractérisé en ce que** la première résine et la deuxième résine sont choisies dans le groupe constitué par les résines époxy.

9. Rouleau selon la revendication 8, **caractérisé en ce que** la résine époxy est choisie dans le groupe constitué par le 4,4'-dihydroxy-2,2-diphénylpropane (résine époxy de bisphénol-A), le bis(3-chloro-2-hydroxypropyl)éther (résine époxy de bisphénol-F), et leurs mélanges.

10. Rouleau selon les revendications 4 et 8, **caractérisé en ce que** la troisième résine est une résine époxy multifonctionnelle.

11. Rouleau selon la revendication 10, **caractérisé en ce que** la résine époxy multifonctionnelle est choisie dans le groupe constitué par l'éther triglycidylique de para-aminophénol (TGPAP), le N,N,N',N'-tétraglycidyl-4,4'-diaminodiphénylméthane (TGDDM) et la résine époxy novolaque.

12. Rouleau selon les revendications 5 et 8, **caractérisé en ce que** la quatrième résine est une résine époxy aliphatique.

13. Rouleau selon l'une quelconque des revendications 3 à 12, **caractérisé en ce que** le premier durcisseur et le deuxième durcisseur sont choisis dans le groupe constitué par les amines multifonctionnelles aromatiques, les amines multifonctionnelles cycloaliphatiques et leurs mélanges.

14. Rouleau selon l'une quelconque des revendications 6 à 13, **caractérisé en ce que** le cinquième composant est choisi dans le groupe constitué par une polyéther-amine, une amine aliphatique, une amine multifonctionnelle aliphatique et leurs mélanges.

15. Rouleau selon l'une quelconque des revendications 3 à 12, **caractérisé en ce que** les premier et deuxième durcisseurs sont différents et sont choisis dans le groupe constitué par les amines aromatiques, les amines cycloaliphatiques et leurs mélanges, une polyéther-amine, les amines multifonctionnelles aliphatiques, les époxyanhydrides, les polyamides, les imidazoles, les dicyanamides et leurs mélanges.

16. Rouleau selon l'une quelconque des revendications 3 à 5, **caractérisé en ce que** les première et deuxième résines sont différentes et sont choisies dans le groupe constitué par les polymères thermodurcissables et thermoplastiques tels que les polyoléfines, un polyester, un polyamide, une polyéther-éthercétone (PEEK), un polyamide-imide (PAI) et un époxy.

17. Rouleau selon l'une quelconque des revendications précédentes, **caractérisé en ce que** les fibres sont choisies dans le groupe constitué par les fibres de verre, les fibres de carbone, les fibres d'aramide, les fibres de carbure, les fibres de polymère et leurs mélanges.

18. Rouleau selon l'une quelconque des revendications précédentes, **caractérisé en ce que** les fibres de la couche de fond sont différentes des fibres de la couche fonctionnelle.

19. Rouleau selon l'une quelconque des revendications précédentes, **caractérisé en ce que** le matériau de matrice comprend en outre des charges et des additifs.

20. Rouleau selon l'une quelconque des revendications précédentes, **caractérisé en ce que** la couche de fond est exempte de charges.

21. Procédé de fabrication d'un revêtement d'un rouleau pour une machine à papier, à carton, à apprêter, ou à ouate, comprenant les étapes suivantes .
- disposition d'une couche de fond comprenant un matériau de matrice et des fibres sur un corps de rouleau,
- disposition d'une couche fonctionnelle comprenant un matériau de matrice et des fibres sur ladite couche de fond,
**caractérisé en ce que** la température de transition vitreuse du matériau de matrice de la couche de fond est inférieure d'au moins 20 °C à la température de transition vitreuse du matériau de matrice de la couche fonctionnelle.

22. Dispositif de fabrication ou de traitement d'une toile de fibres cellulosiques comprenant un rouleau selon l'une quelconque des revendications 1 à 20.

23. Dispositif de fabrication ou de traitement d'une toile de fibres cellulosiques selon la revendication 22, **caractérisé en ce que** le dispositif est une calandre.
